# EUROPEAN PATENT SPECIFICATION

(11) **EP 1 834 112 B1**
(45) Date of publication and mention of the grant of the patent: **20.02.2013**
(21) Application number: 05817000.2
(22) Date of filing: 07.12.2005
(51) Int. Cl.: F16G 5/16, F16H 9/24

(54) **DRIVE BELT FOR A TRANSMISSION WITH CONVEX PULLEY SHEAVES**
ANTRIEBSRIEMEN FÜR EIN GETRIEBE MIT KONVEXEN ANTRIEBSSCHEIBEN
COURROIE D'ENTRAINEMENT POUR TRANSMISSION A ROUELLES DE POULIE CONVEXES

(30) Priority: 08.12.2004 NL 1027685
(43) Date of publication of application: 19.09.2007
(73) Proprietor: ROBERT BOSCH GMBH, 70442 Stuttgart (DE)
(72) Inventor: VAN DER LEEST, Adrianus, Johannes, Wilhelmus, NL-5388 RX Nistelrode (NL); VAN DER MEER, Cornelis, Johannes, Maria, NL-5032 XG Tilburg (NL); FAES, Paulus, Adrianus, Josephus, Maria, NL-5045 ZH Tilburg (NL); VAN DROGEN, Mark, NL-5021 EJ Tilburg (NL)
(74) Representative: Plevier, Gabriel Anton Johan Maria
(86) International application number: PCT/NL2005/000846
(87) International publication number: WO 2006/062400

(56) References cited:
- EP-A- 0 931 959
- EP-A- 1 443 242
- WO-A-03/031841
- DE-A1- 10 018 243
- DE-A1- 10 062 463
- GB-A- 1 549 403
- GB-A- 2 195 165
- JP-A- 63 053 352
- US-A- 3 016 755
- US-A- 3 916 709
- US-A- 4 622 025
- US-A- 4 631 042
- US-A- 5 328 412
- US-A- 6 045 474
- US-A1- 2002 151 399
- US-A1- 2002 183 152
- PATENT ABSTRACTS OF JAPAN vol. 2002, no. 05, 3 May 2002 (2002-05-03) -& JP 2002 031215 A (NISSAN MOTOR CO LTD), 31 January 2002 (2002-01-31)

## Description

The present invention relates to a drive belt, in particular intended for use in a continuously variable transmission with pulleys provided with convex pulley sheaves, as described in the preamble of Claim 1. An example of a drive belt of this type and associated transmission is described in German patent DE-A-100 62 463.

This drive belt, which is known as a push belt, is characterized, inter alia, by a series of transverse elements, each comprising a lower body, a middle body and an upper body. The lateral sides or flanks of the lower body are in this case provided with a convex curvature in the height direction and are intended for frictional contact with the slightly bulging, i.e. likewise radially convexly curved, sheave surfaces of a driving or primary pulley and those of a driven or secondary pulley of the transmission. Part of the top side, facing in the direction of the upper body, of the lower body, i.e. a radially outwardly oriented edge thereof, forms a supporting surface for a continuous tensioning element, which is generally formed by one or more groups of a number of nested, flat, relatively thin rings made from metal. The substantially arrowhead-shaped upper body of the transverse elements is located above or radially outside the tensioning element and encloses the latter in the height direction, while the middle body, which is located at the height of the tensioning element, connects the lower body and the upper body to one another. The laterally directed edges of the centre body in this case each form a stop surface in the axial direction for a group of rings of the tensioning element.

The transverse elements are held in the push belt such that they can move with respect to the circumferential direction of the tensioning element. In this arrangement, one main surface of each transverse element, for example the rear surface, is provided with a recess, and the respective other main surface thereof, for example the front surface, is provided with a projection, with the projection of one transverse element in each case being held in the recess of an adjacent transverse element. In addition, the lower body of the transverse elements is provided with what is described as a tilting edge, namely a generally slightly rounded transition between a top side of the transverse element of virtually constant thickness and a tapering underside, which extends between the flanks in the front or rear surface of the transverse element. The tilting edge permits a tilting or rolling movement between adjacent transverse elements, with the push belt following a curved path in its circumferential direction, as is required at the position of the pulleys.

The known push belt comprises a number of these transverse elements which is such that virtually the entire circumference of the tensioning element is filled, with a series of transverse elements being clamped between the sheaves of the two pulleys, so that force can be transmitted between them with the aid of friction. Partly as a result, a driving power can be transmitted between the pulleys of the transmission, with the transverse elements advancing one another with support and guidance from the tensioning element.

Although the known drive belt inherently functions well, the Applicant has found that during operation in the continuously variable transmission, the coefficient of friction in the theoretical punctiform contact between the flanks and the sheave surfaces unexpectedly and undesirably has a relatively low value if it is compared to the coefficient of friction which is known from the generally known conventional transmission designed, which is already in widespread use and has a linear or even surface contact - albeit interrupted by profiled grooves - between the transverse elements and the pulley sheaves. By way of example, EP-A-0 931 959 reports a coefficient friction of 0.09 for this type of transmission, whereas for the present type of transmission under specific operating conditions this parameter may adopt a value of 0.05 or even less. A lower value of this nature is highly disadvantageous on account of the (proportionally) higher normal force in the frictional contact which is then required for the same frictional force, as well as the associated high mechanical load and wear in the transmission.

It is an object of the present invention to increase the coefficient of friction which occurs in the oil-lubricated frictional contact between the drive belt and the pulleys on the basis of the present type of transmission with convexly curved flanks, the aim being for this coefficient of friction preferably to get very close to the conventional value of approximately 0.09 or even to achieve a higher value. According to the invention, this object can be achieved by using the measure described in Claim 1 in the design of the drive belt.

Although the measure is itself known from the above-mentioned conventional transmission, it was not obvious for this measure also to be employed in the present type of transmission. In the punctiform contact defined therein between the flanks and the sheave surfaces, it is expected that a groove in the flank will have no significant influence on the lubrication conditions, at least compared to its influence on a linear or surface contact. It is therefore not known to use a groove or grooves of this type in combination with the known type of drive belts that are provided with spherical or otherwise convexly curved pulley sheave contact surfaces for decades, which belt type is for example known from US-A-4,622,025 and US-A-3,916,709.

Therefore, it would normally be much more likely to look for a solution to the problem of the low coefficient of friction in the measures which are generally known to increase friction, such as increasing the roughness of one or both contact surfaces, - further - increasing the contact pressure and/or adding additives to the lubricant. Nevertheless, the Applicant has unexpectedly been able to determine on the basis of experimental observation that, at least in the case of the push belt known from DE-A-100 62 463, but most likely also in the case of the so-called chain belt known from US-A-4,622,025, the presence of one or more grooves in the flanks improves the above-mentioned coefficient of friction considerably, i.e. shifts it to a significantly higher value.

Inter alia, it is remarked that a similar type of chain belt is known from EP-A-1 443 242. However, in this latter embodiment the cross elements thereof, i.e. pins and strips, are provided with plane, i.e. uncurved, flanks oriented at a fixed angle relative to the radial direction such that a surface contact is realised between the flanks and the sheave surfaces. This design of the flanks thus corresponds with the conventional transmission design of EP-A-0 931 959, rather than to the presently claimed transmission having punctiform frictional contacts defined therein due to the flanks of the transverse elements being convexly curved in the height direction. Moreover, in EP-A-1 443 242 it is an essential feature that the grooves are defined as laterally closed recesses, which can retain oil to form a pool of oil between the flank and the pulley sheave as a sort of mechanical cushion.

Accordingly, it can be summarised that even though it is well known to provide grooves in a plane flank of a drive belt's transverse element, which plane flank provides a surface contact with the pulley sheaves, such measure has up to now never been suggested or, apparently, even been considered in combination with the presently claimed convexly curved flanks that provide a punctiform frictional contact.

In a first embodiment according to the present invention, the flank is provided with one or more grooves, which extend substantially in the above-mentioned height direction over the entire dimension of the flank. It is preferable for grooves of this type, which are oriented radially at least with respect to the pulley sheaves, to be arranged in the flank distributed more or less uniformly over the thickness of the transverse element, so that the flank is in reality divided into two or more parts of substantially equal dimensions. In the context of the present invention, in particular the embodiment with one single radial groove has proven particularly effective, and for this embodiment a coefficient of friction which was even higher than the above-mentioned conventional value has been measured.

One significant drawback of these embodiments with a radial groove or radial grooves, however, is that at least in the conventional forming process - (precision) punching - of the transverse element, they have to be formed in the surface of the flank in an additional process step, such as grinding or spark erosion. To avoid this drawback, the present invention also provides a second embodiment of the transverse element, in which the flank is provided with a number of grooves, which extend substantially over the thickness of the transverse element. Grooves of this type, which are oriented substantially tangentially, at least with respect to the pulley sheaves, are preferably distributed more or less uniformly over the height of the transverse element. The distance between the grooves is in this case preferably less than the maximum dimension in the height direction of what is known as a Hertzian contact, i.e. the compression region on the flank as would be calculated to occur during operation in the transmission without the grooves. In connection with this second embodiment, the coefficients of friction measured are well above the value originally measured and in the most important operating conditions come very close to the conventional value of 0.09.

The present invention is explained in more detail below by way of example with reference to the appended figures, in which:
Figure 1 diagrammatically depicts a continuously variable transmission provided with two pulleys and a drive belt according to the prior art,
Figure 2 shows a tangentially oriented cross section of the transmission shown in Figure 1 at the location of a pulley sheave,
Figure 3 shows a front view of a transverse element of the drive belt according to the invention, as seen in the direction of movement or circumferential direction of the drive belt,
Figure 4 shows a side view of the transverse element from Figure 3,
Figure 5 shows a side view of a second embodiment of a transverse element according to the invention, and
Figure 6 shows a graph illustrating the effect of the present invention.

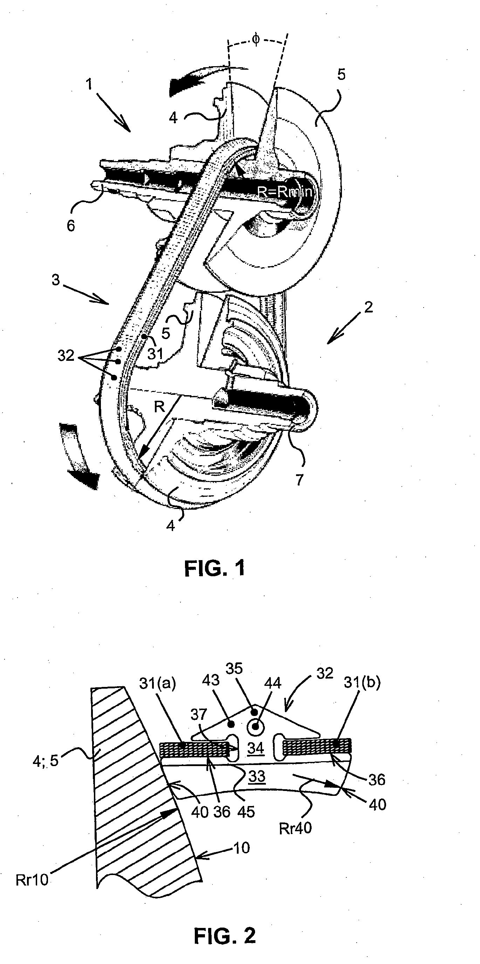

Figure 1 diagrammatically depicts a view of the central parts of a continuously variable transmission according to the prior art. The known transmission comprises a primary pulley 1 on an input shaft 6 of the transmission, which can be driven by an engine (not shown) with a primary couple (of forces) Tp and a secondary pulley 2 on an output shaft 7 of the transmission, which can drive a load (not shown) with a second couple Ts. Both pulleys 1, 2 are provided with a substantially conical pulley sheave 5 which is fixedly secured to the respective pulley axle 6, 7 and with a likewise substantially conical pulley sheave 4 which can be displaced in the axial direction with respect to the said axle 6, 7. A drive belt 3 is clamped between the pulley sheaves 4, 5 of the two pulleys 1, 2, this drive belt in each case describing a path which is substantially in the form of a segment of a circle, i.e. running radius R. A mechanical power can be transmitted between the two pulley axles 6, 7 with the aid of friction between the drive belt 3 and the pulleys 1, 2, the transmission ratio of the transmission 1 being given by the quotient of the running radius R of the drive belt 3 at the location of the primary and secondary pulleys 1 and 2, respectively.

The drive belt 3 shown here is of the so-called push belt type, which comprises a series of transverse elements 32, each composed of a lower body 33, an upper body 35 and a middle body 34 which connects the lower body 33 and the upper body 35 to one another. Part of the top side, facing towards the upper body 35, of the lower body 33, i.e. a radially outwardly oriented edge 36 thereof, on either side of the middle body 34 forms two supporting surfaces 36 for a continuous tensioning element 31, which is formed by two or more groups 31a, 31b of a number of nested flat, relative thin rings made from metal. The substantially arrowhead-shaped upper body 35 of the transverse elements 32 is located radially outside the tensioning element 31 and encloses the latter in the height direction, while the middle body 34 is located between the groups of rings 31a, 31b of the tensioning element 31. The axially laterally oriented edges 37 of the middle body in this case each form a stop surface 37 in the axial direction for a group of rings 31a, 31b.

The transverse elements 32 are held in the push belt 3 such that they can move with respect to the circumferential direction of the tensioning element 31. In this arrangement, one main surface of each transverse element, for example the rear surface 42, is provided with a recess (not shown), and the respective other main surface thereof, for example the front surface 43, is provided with a projection 44, the projection 44 of a transverse element 32 in each case being received in the recess of an adjacent transverse element 32. The lower body 33 of the transverse elements 32 is provided with what is known as a tilting edge 45, namely a generally slightly rounded transition between a top side of the transverse element 32 of virtually constant thickness and an effectively tapering underside thereof, which tilting edge 45 extends in the transverse direction in the front surface 43 of the transverse element 32. The tilting edge 45 permits a tilting or rolling movement between adjacent transverse elements 32, with the result that the push belt 3, as seen in the circumferential direction, can follow a curved path between the sheaves 4, 5 of the pulleys 1, 2.

It is known from the prior art to make the conical surface of the sheaves 4, 5 of the two pulleys 1, 2 spherical or convex, as is diagrammatically depicted in Figure 2 in a tangentially oriented cross section through the transmission from Figure 1 at the location of a pulley sheave 4, 5. In this example, the conical surface 10 of the pulley sheave 4, 5 is slightly convexly curved in the radial direction, with a constant radius of curvature Rr10. The laterally oriented contact surfaces or flanks 40 on either side of the lower body 33 of the transverse elements 32 are also provided with a convex curvature with radius of curvature Rr40 in the radial or height direction. In practice, the two radii of curvature Rr10 and Rr40 mentioned are much larger than those shown in Figure 2 (and further figures); they are exaggerated in the figures for the sake of clarity. Still, the said radii of curvature Rr10, Rr40 are defined such that an angle between the radial direction and the pulley sheaves 4, 5 or the flanks 40 varies to a significant extent, i.e. several degrees, e.g. around four degrees between 7.5 and 11.5 degrees. Thus, geometrically speaking, a punctiform contact is defined between the belt and the pulley.

In addition, in practice, contrary to the above-mentioned constant radius of curvature Rr10, Rr40, radii of curvature that vary in the radial or height direction are also employed.

In the transmission described above, the frictional contact between the sheave surfaces 10 of the pulleys 1, 2 and the respective flanks 40 of the drive belt 3 is produced at what are known as Hertzian elliptical punctiform contacts, in which a liquid lubricant is also used in order to limit wear and/or damage to the respective frictional surfaces 10, 40 as far as possible. Although a frictional contact of this type has already been used for some time in combination with drive belts of what are known as the chain type, which are provided with continuous frictional surfaces 10, 40, the Applicant has found that, at least in combination with the present drive belt 3 of the push belt type, the frictional surfaces 10, 40 which act in the said frictional contact can be considerably increased in size by providing one or more grooves 41 in the flanks 40.

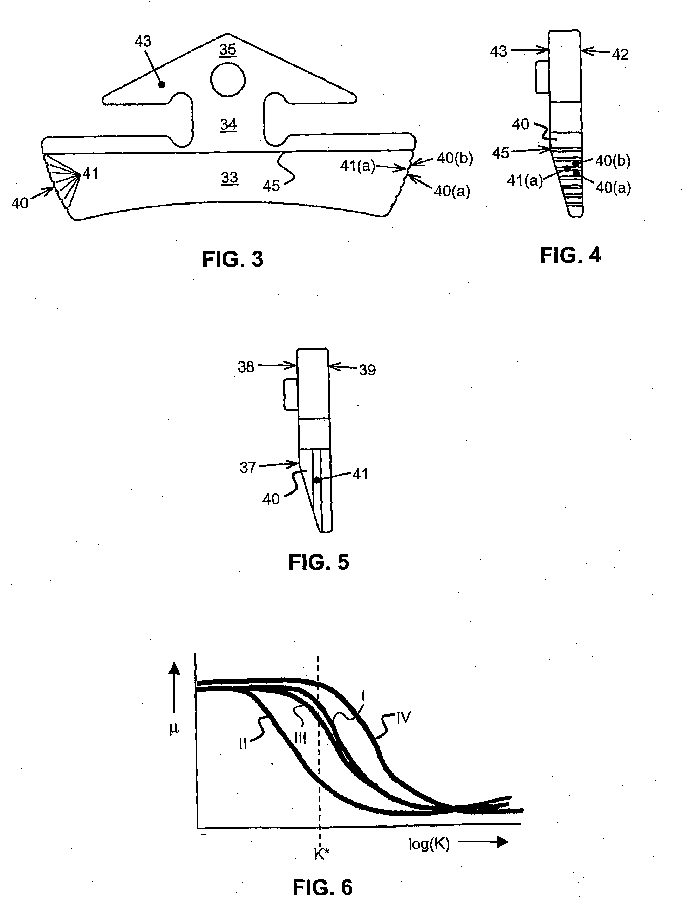

The present invention is diagrammatically depicted in Figures 3 and 4 on the basis of a transverse element 32, the flanks 40 of which are provided with a number of grooves 41 which are oriented substantially in the thickness direction of the transverse element 32, i.e. width-wise on the flank 40, and extend between the rear surface 42 and the front surface 43 thereof. In this context, Figure 3 shows a front view of the transverse element 32 according to the invention, and Figure 4 shows a side view thereof.

In the embodiment of the transverse element 32 shown, the continuous, convexly curved contour of the flank 40 is interrupted by the grooves 41, with the result that the parts 40(a), 40(b) of this contour on either side of a groove 41(a) are oriented at an admittedly small angle with respect to one another. It is of course also possible to retain the continuous contour of the flank 40 by orienting the above-mentioned parts 40(a), 40(b) so as in each case to be in line with one another. Although to be preferred in principle, this latter option is necessary per se for the transmission to function correctly.

The width of the grooves 41 is preferably approximately 1 to 5% of the total dimension of the flank 40 in the height or radial direction, this dimension preferably comprising grooves 41 to an extent of between 10% and 50%. It should be noted that according to the present invention a radial distance between two adjacent grooves 41 is preferably at most equal to half the maximum radial dimension of the Hertzian contact or compression region on the flank 40 as would occur during operation of the transmission in the absence of the grooves 41. It should also be noted that the above-mentioned maximum radial dimension generally increases over the height of the flank 40, as seen in the direction of the upper body 35, so that it is also possible to allow the distance between two adjacent grooves 41 to increase in this direction.

The depth of a groove 41 is a less critical parameter. However, in particular from a practical perspective, according to the invention this depth is preferably from 25% to 50% of the width of the grooves 41.

In a second embodiment according to the present invention, which is illustrated in Figure 5 in the form of a side view of the transverse element 32, the flank 40 is provided with one groove 41 which extends over the entire height thereof and the width of which according to the invention is preferably approximately 10% to 25% of the thickness of the transverse element 32. In particular this second embodiment has proven highly effective in the context of the present invention.

The graph shown in Figure 6 summarizes the findings discussed above once again. The graph plots the coefficient of friction µ in the frictional contact between the flanks 40 and the sheave surfaces 10 against the logarithm of characteristic value K, in which the most important influencing parameters are represented and of which K* represents a value typically occurring during operation, for four types of drive belt I-IV. It can be seen from this figure that the coefficient of friction µ between curved but continuous contact surfaces has the relatively low value represented by curve II. This is certainly the case if this value is compared with the coefficient of friction µ in a conventional design of transmission with straight flanks 40 and sheave surfaces 10 which is represented by curve I.

In Figure 6, curve III plots the above-mentioned coefficient of friction µ for the embodiment of the drive belt 3 according to the invention illustrated in Figure 3, while curve IV plots the coefficient of friction µ for the transverse element 32 from Figure 5. The latter two curves III and IV indicate that the coefficient of friction µ between the pulleys 1, 2 and the drive belt 3, as a result of the present invention being used, approaches (curve III) the level (curve I) known from the conventional transmission or may even exceed it (curve IV).

## Claims

1. Continuously variable transmission for motor vehicles, provided with two pulleys (1, 2), each comprising two substantially conical pulley sheaves (4, 5), which sheaves (4, 5) are provided with a convex curvature in radial direction, where between a drive belt (3) is held at a variable radial position (R), which drive belt (3) is provided with transverse elements (32), which on both lateral sides are provided with a flank (40) that is intended for frictional contact with the pulleys (1, 2) and that, at least in its height direction, i.e. radially relative to the pulleys (1, 2), is provided with a convex curvature, **characterized in that** one or more grooves (41) are provided in the flank (40).

2. Transmission according to Claim 1, **characterized in that** the groove (41) extends over the entire width or height dimension of the flank (40), each groove (41) thus forming an open ended channel when the element (32) is in contact with the pulley (1, 2).

3. Transmission according to Claim 1 or 2, **characterized in that** the flank (40) is provided with one single groove (41), which extends essentially in the height direction of the flank (40) and which is located at least virtually in the centre of the flank (40).

4. Transmission according to Claim 1, 2 or 3, **characterized in that** the flank (40) is provided with a set of grooves (41), which extend essentially width-wise on the flank (40), i.e. perpendicular to the radial direction relative to the pulley (1, 2).

5. Transmission according to Claim 4, **characterized in that**, together the grooves (41) make up between 10% and 50% of the total surface area of the flank (40) determined by the product of the width and height of the flank (40).

6. Transmission according to one of the preceding claims, **characterized in that** a groove (41) is defined by a smoothly curved concave bottom surface, whereof each long side mates with the flank (40) through a convexly curved edge surface.

7. Drive belt (3) for use in the transmission according to one of the preceding claims, which belt (3) is provided with a continuous tensioning element (31) which encloses a number of transverse elements (32) in the radial direction, and permits the transverse elements (32) to move in the circumferential direction of the belt (3) relative to the continuous tensioning element (31) thereof and whereby the transverse elements (32) on both lateral sides thereof are provided with a flank (40) that is intended for frictional contact with the transmission pulleys (1, 2) and that, at least in its height direction, i.e. radially relative to the pulleys (1, 2), is provided with a convex curvature, **characterized in that** one or more grooves (41) are provided in the flank (40).

## Patentansprüche

1. Stufenlos veränderliches Getriebe für Kraftfahrzeuge, das mit zwei Riemenscheiben (1, 2) versehen ist, wovon jede zwei im Wesentlichen konische Riemenantriebsscheiben (4, 5) umfasst, wobei die Antriebsscheiben (4, 5) in radialer Richtung mit einer konvexen Krümmung versehen sind, wobei dazwischen ein Antriebsriemen (3) an einer veränderlichen radialen Position (R) gehalten wird, wobei der Antriebsriemen (3) mit Querelementen (32) versehen ist, die auf beiden seitlichen Seiten mit einer Flanke (40) versehen sind, die für einen Reibkontakt mit den Riemenscheiben (1, 2) bestimmt ist, und wenigstens in seiner Höhenrichtung, d. h. radial in Bezug auf die Riemenscheiben (1, 2), mit einer konvexen Krümmung versehen ist, **dadurch gekennzeichnet, dass** in der Flanke (40) eine oder mehrere Rillen (41) vorgesehen sind.

2. Getriebe nach Anspruch 1, **dadurch gekennzeichnet, dass** sich die Rille (41) über die gesamte Breiten- oder Höhenabmessung der Flanke (40) erstreckt, wobei somit jede Rille (41) einen Kanal mit offenem Ende bildet, wenn das Element (32) mit der Riemenscheibe (1, 2) in Kontakt ist.

3. Getriebe nach Anspruch 1 oder 2, **dadurch gekennzeichnet, dass** die Flanke (40) mit einer einzigen Rille (41) versehen ist, die sich im Wesentlichen in Höhenrichtung der Flanke (40) erstreckt und die sich wenigstens im Wesentlichen in der Mitte der Flanke (40) befindet.

4. Getriebe nach Anspruch 1, 2 oder 3, **dadurch gekennzeichnet, dass** die Flanke (40) mit einer Gruppe von Rillen (41) versehen ist, die sich im Wesentlichen in Breitenrichtung der Flanke (40), d. h. senkrecht zu der radialen Richtung in Bezug auf die Riemenscheibe (1, 2), erstrecken.

5. Getriebe nach Anspruch 4, **dadurch gekennzeichnet, dass** die Rillen (41) zusammen einen Anteil im Bereich von 10 % bis 50 % der gesamten Oberfläche der Flanke (40), die durch das Produkt aus der Breite und der Höhe der Flanke (40) bestimmt ist, ausmachen.

6. Getriebe nach einem der vorhergehenden Ansprüche, **dadurch gekennzeichnet, dass** eine Rille (41) durch eine gleichmäßig gekrümmte konkave untere Oberfläche definiert ist, wovon sich jede lange Seite mit einer konvex gekrümmten Kantenoberfläche an die Flanke (40) anschmiegt.

7. Antriebsriemen (3) für die Verwendung in dem Getriebe nach einem der vorhergehenden Ansprüche, wobei der Riemen (3) mit einem kontinuierlichen Spannelement (31) versehen ist, das eine Anzahl von Querelementen (32) in radialer Richtung umschließt und den Querelementen (32) ermöglicht, sich in der Umfangsrichtung des Riemens (3) in Bezug auf das kontinuierliche Spannelement (31) hiervon zu bewegen, wobei die Querelemente (32) an ihren beiden seitlichen Seiten mit einem Flansch (40) versehen sind, der für einen Reibkontakt mit den Getrieberiemenscheiben (1, 2) bestimmt ist, wobei er wenigstens in seiner Höhenrichtung, d. h. radial in Bezug auf die Riemenscheiben (1, 2), mit einer konvexen Krümmung versehen ist, **dadurch gekennzeichnet, dass** in der Flanke (40) eine oder mehrere Rillen (41) vorgesehen sind.

## Revendications

1. Transmission à variation continue pour véhicules automobiles, pourvue de deux poulies (1, 2), chacune comprenant deux rouelles de poulie essentiellement coniques (4, 5), lesquelles rouelles (4, 5) sont pourvues d'une courbure convexe dans la direction radiale, une courroie d'entraînement (3) étant prévue entre elles dans une position radiale variable (R), laquelle courroie d'entraînement (3) est pourvue d'éléments transversaux (32) pourvus des deux côtés latéraux d'un flanc (40) prévu pour un contact de frottement avec les poulies (1, 2) et qui, au moins dans la direction de sa hauteur, c'est-à-dire radialement par rapport aux poulies (1, 2), est pourvu d'une courbure convexe, **caractérisée en ce qu'**une ou plusieurs rainures (41) sont prévues dans le flanc (40).

2. Transmission selon la revendication 1, **caractérisée en ce que** la rainure (41) s'étend sur toute la dimension en largeur ou en hauteur du flanc (40), chaque rainure (41) formant ainsi un canal à extrémité ouverte lorsque l'élément (32) est en contact avec la poulie (1, 2).

3. Transmission selon la revendication 1 ou 2, **caractérisée en ce que** le flanc (40) est pourvu d'une seule rainure (41) qui s'étend essentiellement dans la direction de la hauteur du flanc (40) et qui est située au moins virtuellement au centre du flanc (40).

4. Transmission selon la revendication 1, 2 ou 3, **caractérisée en ce que** le flanc (40) est pourvu d'un ensemble de rainures (41), qui s'étendent essentiellement en largeur sur le flanc (40), c'est-à-dire perpendiculairement à la direction radiale par rapport à la poulie (1, 2).

5. Transmission selon la revendication 4, **caractérisée en ce que**, conjointement, les rainures (41) constituent entre 10 % et 50 % de la superficie totale du flanc (40) déterminée par le produit de la largeur et de la hauteur du flanc (40).

6. Transmission selon l'une quelconque des revendications précédentes, **caractérisée en ce qu'**une rainure (41) est définie par une surface inférieure de courbure concave régulière, dont chaque long côté s'accouple avec le flanc (40) par une surface à bord de courbure convexe.

7. Courroie d'entraînement (3) destinée à l'utilisation dans la transmission selon l'une quelconque des revendications précédentes, laquelle courroie (3) est pourvue d'un élément de tensionnement continu (31) qui renferme un certain nombre d'éléments transversaux (32) dans la direction radiale, et qui permet aux éléments transversaux (32) de se déplacer dans la direction circonférentielle de la courroie (3) par rapport à l'élément de tensionnement continu (31) de celle-ci, et dans laquelle les éléments transversaux (32) sur les deux côtés latéraux de ceux-ci sont pourvus d'un flanc (40) qui est prévu pour un contact de frottement avec les poulies de transmission (1, 2) et qui, au moins dans la direction de sa hauteur, c'est-à-dire radialement par rapport aux poulies (1, 2), est pourvu d'une courbure convexe, **caractérisée en ce qu'**une ou plusieurs rainures (41) sont prévues dans le flanc (40).
